**Europäisches Patentamt**

**European Patent Office**

**Office européen des brevets**

(19)

(11) Numéro de publication: **0 246 120**
**A2**

(12) # DEMANDE DE BREVET EUROPEEN

(21) Numéro de dépôt: **87400550.7**

(22) Date de dépôt: **12.03.87**

(51) Int. Cl.³: **G 01 F 23/00**
**G 01 D 1/02**

(30) Priorité: **13.03.86 FR 8603560**
**15.07.86 FR 8610269**

(43) Date de publication de la demande:
**19.11.87 Bulletin 87/47**

(84) Etats contractants désignés:
**DE ES GB IT**

(71) Demandeur: **VEGLIA**
**125, rue de Montreuil**
**F-75540 Paris Cédex 11(FR)**

(72) Inventeur: **Huynh, Tan Duc**
**1, Passage Iphigénie Noisiel Cedex 157**
**F-77420 Champs sur Marne(FR)**

(74) Mandataire: **Bloch, Gérard et al,**
**6, rue du Faubourg Saint-Honoré**
**F-75008 Paris(FR)**

(54) **Dispositif électronique d'interface entre un capteur et un afficheur.**

(57) Un générateur commandable (300, 3, 4) délivre un signal (SNA) à l'afficheur et est relié à une entrée d'un comparateur (1) dont l'autre entrée reçoit le signal (EA) de sortie du capteur. La sortie (SC) du comparateur (1) commande le comptage ou le décomptage d'un compteur-décompteur (2) d'impulsions d'horloges (HA). La sortie de signe (SI) du compteur-décompteur (2) commande le générateur (300, 3, 4).

L'invention s'applique à la mesure du niveau d'un liquide dans le réservoir d'un véhicule automobile par exemple. Les variations parasites rapides du niveau sont filtrées.

FIG.1

EP 0 246 120 A2

La présente invention a pour objet un dispositif électronique d'interface entre un capteur d'une grandeur physique, à sortie analogique, et un afficheur de la valeur de ladite grandeur physique, comprenant :

- un générateur commandable, pour commander ledit afficheur, et pourvu d'une sortie analogique, et,
- un comparateur analogique d'amplitude, pour comparer les amplitudes des signaux en sortie dudit capteur et dudit générateur commandable, et dont le signal binaire de sortie commande ledit générateur commandable.

Un tel dispositif est utilisé en particulier à bord des véhicules automobiles.

Par exemple, un tel dispositif est intercalé entre le capteur de niveau de carburant dans le réservoir du véhicule et un afficheur monté sur son tableau de bord.

On connaît déjà un dispositif du type défini ci-dessus, décrit dans le brevet US-A-3 983 549.

Dans ce dispositif, le générateur commandable comprend un oscillateur, un circuit de mise en forme, un compteur, un convertisseur numérique-analogique, et une mémoire. Ce générateur commandable est agencé pour délivrer un signal croissant de façon monotone, et il est pourvu d'une entrée d'inhibition, ici sur la mémoire, pour "geler" le signal de sortie du générateur commandable lorsque sa valeur est égale à celle du signal de sortie du capteur. L'ensemble est commandé périodiquement pour échantillonner le signal en sortie du capteur et permet d'obtenir, sur l'afficheur, une suite de valeurs égales aux échantillons successifs du signal en sortie du capteur.

Un tel dispositif a cependant pour inconvénient le fait qu'il ne procure aucun amortissement des variations parasites rapides qui peuvent affecter la grandeur physique. Dans le cas où cette grandeur physique est le niveau de carburant dans le réservoir d'un véhicule, les variations rapides du signal en sortie du capteur, qui résultent du déplacement aléatoire du carburant dans le réservoir lorsque le véhicule se déplace, ne sont pas amorties, et on n'obtient pas, sur l'afficheur, une indication stable, représentative du niveau moyen dans le réservoir. Afin d'éviter de fournir des indications fausses lorsque le véhicule est incliné, le dispositif du brevet US-A-3 983 549 est agencé pour que le réactualisation de l'affichage se trouve inhibée en cas d'inclinaison du véhicule, mais ceci ne procure aucun effet de moyennage du signal en sortie du capteur et ne garantit donc pas que la valeur affichée représente le niveau moyen du carburant.

On connaît par ailleurs un dispositif d'interface, procurant un moyennage des variations rapides, et décrit dans la demande/N° française 85 19 396 au nom de la demanderesse. Dans ce dispositif, les variations parasites rapides du signal de sortie du capteur sont amorties par un filtre analogique passe-bas, mettant en oeuvre une résistance et un condensateur. Compte tenu du fait que la constante de temps du filtre utilisé doit être relativement élevée, il est nécessaire d'utiliser un gros condensateur, donc de prix de revient et d'encombrement élevés. De plus, si l'on souhaite pouvoir modifier temporairement les paramètres de filtrage pour obtenir un fonctionnement du dispositif plus satisfaisant, en réduisant, par exemple, la constante de temps dans les instants qui suivent la mise sous tension du véhicule, afin que l'afficheur donne rapidement une indication exacte, il est nécessaire d'utiliser des relais, qui augmentent encore le coût et l'encombrement du dispositif.

Pour éviter ces inconvénients, on peut remplacer le filtre analogique ci-dessus par un filtre numérique, ne nécessitant pas de condensateur de filtrage, et d'une plus grande souplesse d'emploi. C'est le cas des dispositifs décrits dans les demandes britannique GB-A-2 100 487 et allemande DE-A-2 849 066, qui comportent en entrée un convertisseur analogique-numérique, en sortie un convertisseur numérique-analogique, et entre les deux, plusieurs comparateurs numériques et de nombreux circuits de traitement numérique· Ces dispositifs ont pour inconvénient d'être complexes et donc de nécessiter soit de nombreux composants, soit une surface élevée de semi-conducteur si l'ensemble est réalisé sur un substrat unique.

La présente invention vise à pallier les inconvénients précédents, en procurant un dispositif capable d'amortir, par un effet de moyennage, les variations parasites rapides de la grandeur physique, et n'utilisant ni condensateur de forte valeur, ni de circuits complexes de traitement numérique.

Elle a pour objet, à cet effet, un dispositif du type défini ci-dessus, caractérisé par le fait que :

- ledit générateur commandable est pourvu d'une entrée de commande binaire commandant l'augmentation et la diminution de son signal de sortie,
- il est prévu, en outre, une horloge et un premier compteur-décompteur d'un premier signal d'horloge, et,
- le signal binaire de sortie dudit comparateur commande le comptage et le décomptage du premier compteur-décompteur, dont le signal binaire de signe commande l'augmentation et la diminution du signal de sortie dudit générateur.

Dans le dispositif de l'invention, le compteur-décompteur intègre et filtre les variations parasites rapides affectant le signal en sortie du capteur. Il réalise donc la même fonction que le condensateur du filtre analogique de l'art antérieur, mais de façon beaucoup plus simple que dans un filtre numérique classique.

Avantageusement, il est prévu des moyens commandables, pour commander ledit générateur de façon à ce qu'il délivre un signal variant de façon monotone, dans un sens et à une vitesse commandables.

Dans ce cas, la commande d'une vitesse rapide pour la variation monotone du signal de sortie du générateur, jusqu'à ce que ce dernier soit égal au signal de sortie du capteur, permet d'obtenir rapidement, lorsqu'on le désire, une valeur affichée juste. Ceci peut être utilisé, par exemple, lorsqu'il y a eu remplissage du réservoir, afin de connaître le niveau sans devoir attendre un temps relativement long lié à la constante de temps de l'intégration faite par le premier compteur-décompteur, qui se trouve alors temporairement hors service.

Dans une première forme de réalisation de l'invention, ledit générateur commandable comprend des moyens pour engendrer un premier train d'impulsions, un deuxième compteur-décompteur pourvu d'une entrée d'horloge recevant ledit premier train d'impulsions et un convertisseur numérique-analogique relié à la sortie numérique dudit deuxième compteur-décompteur, l'entrée de commande dudit générateur étant l'entrée de commande de comptage-décomptage dudit deuxième compteur-décompteur.

Un générateur ayant la structure précédente peut être intégré sur une surface relativement faible de semi-conducteur.

Dans une deuxième forme de réalisation, ladite grandeur physique est le niveau de carburant à bord d'un véhicule, et ledit générateur commandable comprend des moyens pour engendrer un premier train d'impulsions de fréquence de récurrence commandable, commandée par ladite sortie de signe dudit premier compteur-décompteur, un deuxième compteur-décompteur pourvu d'une entrée d'horloge recevant ledit premier train d'impulsions et d'une entrée de commande de comptage-décomptage reliée, pendant le déplacement du véhicule, à un potentiel assurant la commande de décomptage, et un convertisseur numérique-analogique relié à la sortie numérique dudit deuxième compteur-décompteur.

Dans ce cas, lors du déplacement du véhicule, le deuxième compteur-décompteur étant commandé pour décompter, sa sortie numérique ne peut que décroître. Il n'est donc pas nécessaire de prévoir des circuits spéciaux de blocage de ses accroissements, si l'on veut éviter, lors du déplacement du véhicule, l'observation, par le conducteur, d'un accroissement de la valeur affichée, alors que normalement le niveau moyen de carburant ne peut que diminuer. En effet, suite à un fonctionnement parasite ou à une embardée particulièrement importante du véhicule, un tel accroissement peut se produire et doit être "bloqué", c'est-à-dire ne pas être transmis à l'afficheur, dans le cas de la première forme de réalisation.

Avantageusement, lorsque ladite grandeur physique est le niveau de carburant à bord d'un véhicule pourvu d'un capteur supplémentaire de l'un des types suivants : compte-tour électronique et débitmètre, ledit capteur supplémentaire engendrant un deuxième train d'impulsions, lesdits moyens pour engendrer ledit premier train d'impulsions sont agencés pour que la fréquence de récurrence dudit premier train d'impulsions soit une fonction linéaire de la fréquence de récurrence dudit deuxième train d'impulsions.

Ainsi, le rythme d'actualisation de la valeur affichée est d'autant plus élevé que le véhicule roule vite et consomme donc davantage de carburant.

La présente invention sera mieux comprise à l'aide de la description suivante de deux formes de réalisation du dispositif d'interface de l'invention, faite en se référant aux dessins annexés, sur lesquels :

- la figure 1 représente un schéma par blocs d'une première forme de réalisation du dispositif de l'invention;

- la figure 2 représente un schéma par blocs du circuit de commutation du dispositif de la figure 1;

- la figure 3 représente un schéma détaillé du commutateur logique du circuit de commutation de la figure 2;

- la figure 4 représente un schéma par blocs de la base de temps du dispositif de la figure 1;

- la figure 5 représente un diagramme temporel de signaux engendrés par la base de temps de la figure 4;

- la figure 6 représente un schéma détaillé du circuit diviseur avec décalage du dispositif de la figure 1;

- la figure 7 représente un diagramme temporel des principaux signaux du circuit diviseur avec décalage de la figure 6;

- la figure 8 représente un schéma détaillé du circuit de détection de remplissage et de vidange, et de blocage des accroissements parasites du dispositif de la figure 1;

- la figure 9 représente un schéma par blocs du circuit d'application d'un facteur d'échelle du dispositif de la figure 1;

- la figure 10 représente un schéma par blocs du diviseur par un nombre variable du circuit d'application du facteur d'échelle de la figure 9;

- la figure 11 représente un schéma par blocs d'une deuxième forme de réalisation du dispositif de l'invention;

- la figure 12 représente un schéma détaillé du circuit diviseur avec décalage à rapport de division commandable du dispositif de la figure 11, et,

- la figure 13 représente un schéma détaillé du circuit de détection de remplissage et de vidange du dispositif de la figure 11.

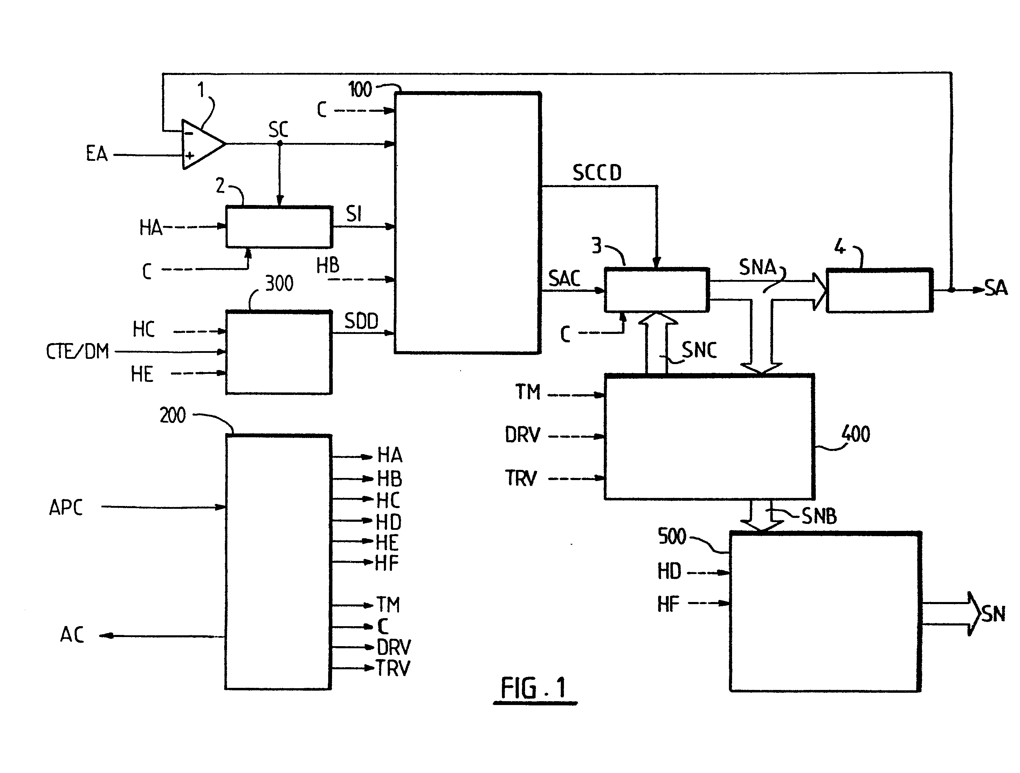

En référence à la figure 1, un dispositif électronique d'interface, ou "interface", entre un capteur d'une grandeur physique et un afficheur est utilisé ici sur un véhicule automobile pour l'affichage du niveau de carburant dans le réservoir du véhicule.

Un capteur de niveau, non représenté car classique, monté sur ce réservoir, délivre à une première entrée de l'interface un signal électrique EA de type analogique représentatif du niveau de carburant dans le réservoir.

Un capteur supplémentaire du type compte-tour électronique

ou du type débitmètre, non représenté car classique, délivre à une deuxième entrée de l'interface un train d'impulsions CTE/DM dont la fréquence de récurrence est d'autant plus grande que le moteur du véhicule tourne vite et que sa consommation instantanée de carburant est plus importante.

Un signal binaire APC, au niveau bas tant que le véhicule n'est pas sous tension et au niveau haut lorsqu'il est sous tension, c'est-à-dire lorsque le "contact" est mis, disponible de façon connue sur n'importe quel véhicule, est appliqué à une troisième entrée de l'interface.

Par ailleurs, de façon non représentée car classique et par souci de simplicité, tous les circuits et composants électroniques de l'interface sont alimentés en permanence par la batterie du véhicule, même lorsque, le véhicule étant à l'arrêt, le "contact" est coupé. La consommation extrêmement faible de l'interface, réalisé sous forme d'un circuit intégré utilisant la technologie CMOS, permet en effet de le laisser constamment alimenté, sans préjudice pour la charge de la batterie.

Lorsqu'il est alimenté, en réponse aux signaux précédents EA, CTE/DM et APC appliqués sur ses trois entrées, l'interface délivre des signaux SA, SN et AC sur trois sorties. Comme cela va être expliqué dans la suite, le signal SA est analogique et peut être utilisé pour commander un afficheur à entrée analogique, par exemple du type à cadre mobile. Le signal SN est numérique et peut être utilisé pour commander un afficheur numérique, par exemple du type à sept segments. Le signal AC est un signal permettant l'alimentation en énergie électrique du capteur de niveau du réservoir.

9

La constitution de l'interface va maintenant être décrite. L'entrée recevant le signal APC est reliée à une base de temps 200 qui délivre ici six signaux binaires d'horloge HA, HB, HC, HD, HE et HF, ayant six fréquences différentes et cinq signaux binaires AC, TM, C, DRV et TRV dont la variation temporelle dépend du signal APC d'une façon qui sera décrite par la suite.

L'entrée recevant le signal EA est l'entrée "plus" d'un comparateur analogique d'amplitude 1 dont l'entrée "moins" est reliée à la sortie délivrant le signal SA.

Un premier compteur-décompteur 2 est pourvu d'une entrée d'horloge recevant le signal d'horloge HA, d'une entrée de remise à zéro recevant le signal C, d'une entrée de commande de comptage-décomptage recevant le signal binaire de sortie du comparateur SC, et d'une sortie binaire de signe SI.

Un circuit diviseur avec décalage 300 est pourvu de trois entrées, recevant le signal d'horloge HC, le signal d'horloge HE et le signal CTE/DM, et d'une sortie délivrant un signal SDD. Le signal SDD est un train d'impulsions dont la fréquence de récurrence $f_{SDD}$ est une fonction linéaire de la fréquence de récurrence $f_{CTE/DM}$ du signal CTE/DM, ici de la forme :

$$f_{SDD} = \frac{1}{N} (f_{CTE/DM} - f_{HC})$$

expression dans laquelle N est un entier naturel et $f_{HC}$ est la fréquence du signal d'horloge HC.

Un circuit de commutation 100 est pourvu de cinq entrées recevant les signaux C, SC, SI, HB, et SDD, et de deux sorties délivrant des signaux SCCD et SAC. Comme cela sera décrit dans la suite, la sortie délivrant le signal SCCD est commutée soit sur l'entrée recevant le signal SC, soit sur l'entrée recevant le signal SI; de même la sortie délivrant le signal SAC est commutée directement soit sur l'entrée recevant le signal HB, soit sur l'entrée recevant le signal SDD.

Un deuxième compteur-décompteur 3 est pourvu d'une entrée d'horloge recevant le signal SAC, d'une entrée de remise à zéro recevant le signal C, d'une entrée de commande de comptage-décomptage recevant le signal SCCD, d'une entrée numérique, ici parallèle, recevant un signal numérique SNC qui sera défini ultérieurement, et d'une sortie numérique, ici parallèle, délivrant sur un bus parallèle, un signal numérique SNA.

Un convertisseur numérique-analogique 4 est pourvu d'une entrée numérique, ici parallèle, recevant le signal SNA, et d'une sortie analogique délivrant le signal SA.

Un circuit 400 de détection de remplissage et de vidange et de blocage des accroissements parasites est pourvu de trois entrées binaires recevant les signaux TM, DRV et TRV, d'une entrée numérique, ici parallèle, recevant le signal SNA et de deux sorties numériques, ici parallèles, délivrant un signal numérique SNB et le signal numérique SNC dont il a déjà été question, relié à l'entrée numérique parallèle du deuxième compteur-décompteur 3.

Enfin, un circuit 500 d'application d'un facteur d'échelles est pourvu de deux entrées binaires recevant les signaux d'horloge HD et HF, d'une entrée numérique, ici parallèle, recevant le signal SNB et d'une sortie numérique, ici parallèle, délivrant le signal SN.

Avant de décrire de façon plus détaillée chacun des circuits précédents, nous aborderons le fonctionnement de
l'interface qui vient d'être décrit, en faisant tout d'abord abstraction du circuit 400 de détection de remplissage et de vidange et de blocage des accroissements parasites, et du circuit 500 d'application d'un facteur d'échelle.

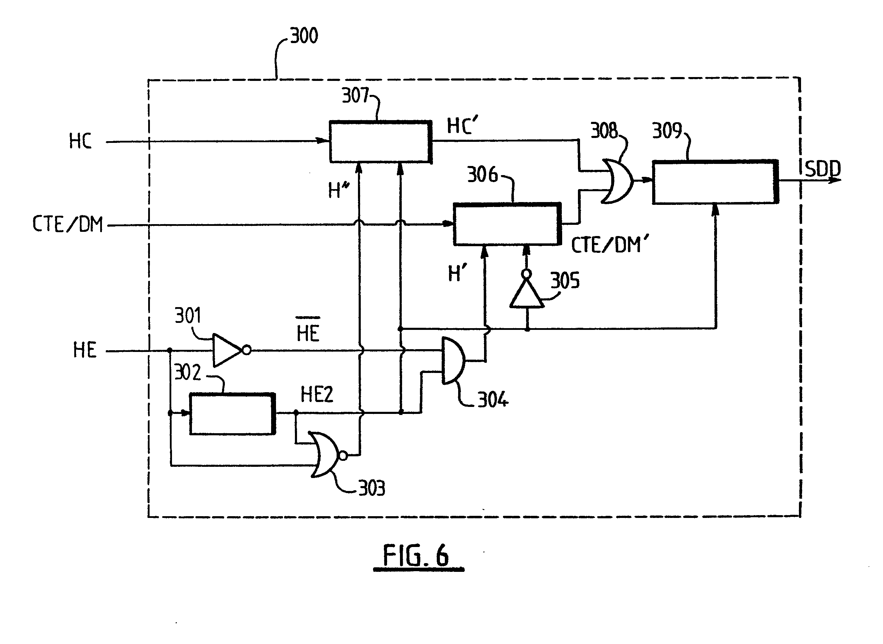

En référence à la figure 5, la base de temps 200, en
réponse au flanc de montée du signal APC, qui signifie que
le "contact" du véhicule vient d'être mis, fait passer le
signal AC au niveau haut, de façon à alimenter le capteur
de niveau, et fait passer le signal C au niveau haut
pendant un bref intervalle de temps, de façon à former une
impulsion, appelée impulsion de conversion pour des raisons
qui seront évidentes par la suite. L'impulsion de conversion du signal C met à zéro les compteurs-décompteurs 2
et 3 et commande au circuit de commutation 100 de commuter
la sortie délivrant le signal SCCD sur l'entrée recevant
le signal SC et la sortie délivrant le signal SAC sur
l'entrée recevant le signal HB. Immédiatement après l'impulsion de conversion C, le compteur-décompteur 3 est à
zéro et donc les signaux SNA et SA sont nuls. Comme le
signal EA est positif puisque le capteur de niveau est
alimenté, le signal SC est au niveau haut. Le signal SCCD
est donc au niveau haut, ce qui correspond au comptage des
impulsions du signal SAC, c'est-à-dire du signal HB, par
le compteur-décompteur 3. Le signal numérique SNA et le
signal analogique SA varient donc de façon monotone, dans
le sens croissant, et à une vitesse commandée par la fréquence du signal d'horloge HB, jusqu'à ce que, le signal
SA étant égal au signal EA, le signal SC en sortie du
comparateur passe au niveau bas. En effet, à ce moment,
le circuit de commutation 100, en réponse au flanc descendant du signal SC, commute la sortie délivrant le signal SCCD sur l'entrée recevant le signal SI et la sortie délivrant le signal SAC sur l'entrée recevant le signal SDD.
Comme cela sera vu par la suite, la fréquence de récurrence des impulsions du signal SDD est très faible comparée à celle du signal HB et les signaux SNA et SA ne sont
plus affectés que de variations très lentes. Une conversion a donc eu lieu, pratiquement instantanée comme cela
sera vu, et qui permet de disposer, immédiatement après
la mise du "contact", de signaux SNA et SA représentatifs
du niveau dans le réservoir. Ici, le convertisseur numéri-
que-analogique 4 est à 8 bits et donc 256 niveaux, et la
fréquence du signal d'horloge HB est de 2560 Hz. La conversion dure donc un dizième de seconde si le réservoir est
plein, et moins si le réservoir n'est que partiellement
plein.

Pendant le temps de la conversion, le premier compteur-
décompteur 2 a compté au plus une impulsion car la fréquence d'horloge du signal HA est ici de 10 Hz.

Lorsque le véhicule roule, du fait des déplacements du
carburant dans le réservoir, le signal EA est affecté,
autour de sa valeur moyenne qui évolue relativement lentement du fait de la consommation du moteur, de variations
parasites rapides. Le signal SC est au niveau haut pour
les variations positives du signal EA et au niveau bas
pour ses variations négatives. Comme le signal SC commande
le comptage ou le décomptage des impulsions du signal HA,
par le compteur-décompteur 2, le signe de la valeur comptée par ce compteur-décompteur 2 est, au bout d'un certain temps, représentatif de la variation moyenne du signal EA. En particulier, si ce signe est négatif, c'est
que, en moyenne, le signal EA est resté inférieur au signal
SA qui doit donc être réduit. Ceci est obtenu grâce au
signal SI qui, recopié par le signal SCCD, commande le comptage ou le décomptage des impulsions du signal SAC par le deuxième compteur-décompteur 3, et donc une augmentation ou une diminution des signaux SNA et SA. Le signal SAC, qui recopie le signal SDD, a une fréquence de récurrence commandée par le signal CTE/DM pour correspondre à sensiblement une impulsion toutes les vingt minutes lorsque le moteur tourne au ralenti et sensiblement vingt impulsions par seconde lorsqu'il tourne à plein régime. Ainsi la dérivée du signal SA est d'autant plus grande que le moteur tourne à plein régime, ce qui permet de faire un rattrapage d'autant plus rapide que la consommation de carburant est importante.

Comme on le voit, la valeur affichée, qui dépend des signaux SNA ou SA, selon qu'on utilise un afficheur numérique ou analogique, respectivement, suit les variations lentes du niveau dans le réservoir, sans que les variations parasites rapides du signal EA ne soient transmises, grâce à l'effet d'intégration, ou encore de moyennage temporel, du premier compteur-décompteur 2. Ce résultat est obtenu car c'est le signal SI, de signe de la valeur comptée par le premier compteur-décompteur 2, qui commande le comptage ou le décomptage du deuxième compteur-décompteur 3. Plus généralement, on peut dire que le circuit diviseur avec décalage 300, le compteur-décompteur 3 et le convertisseur numérique-analogique 4, montés en cascade, constituent un générateur commandable, qui commande l'afficheur, ici par le signal SNA, et qui est pourvu d'une sortie analogique délivrant le signal SA, ce signal SA pouvant augmenter ou diminuer selon la valeur du signal appliqué à l'entrée binaire de commande de comptage-décomptage du compteur-décompteur 3, entrée de commande de comptage-décomptage qui est donc une entrée binaire de commande de l'augmentation ou de la diminution du signal SA en sortie du générateur commandable, ici recevant le signal SI.

De même, le circuit de commutation 100 a pour rôle de permettre une conversion rapide en commandant le générateur commandable précédent pour qu'il délivre un signal variant de façon monotone, ici dans un sens croissant et à une vitesse commandable par la valeur de la fréquence d'horloge du signal HB.

Le rôle du circuit 400 de détection de remplissage et de vidange et de blocage des accroissements, ainsi que celui du circuit 500 d'application du facteur d'échelle vont maintenant être abordés.

Pendant que le véhicule roule, le circuit 400 a pour rôle de délivrer un signal de sortie SNB égal au signal SNA à ceci près que si, pour une raison qui ne peut être qu'un fonctionnement parasite, le signal SNA s'accroît, cet accroissement parasite n'est pas transmis par le signal SNB, de façon à ce que le conducteur du véhicule ne puisse observer une augmentation de la valeur affichée, alors qu'il sait que le niveau moyen de carburant ne peut que diminuer.

Le circuit 500 permet d'appliquer un facteur d'échelle au signal SNB, de façon à ce que la valeur indiquée par l'afficheur numérique situé en aval du circuit 500 représente directement, soit des litres, soit des gallons anglais, soit des gallons américains.

Le circuit 400 a un rôle supplémentaire lors de l'arrêt du véhicule. A ce moment, comme le montre la figure 5, la base de temps 200 maintient le signal AC au niveau haut pendant ici six secondes après que le signal APC soit passé au niveau bas, c'est-à-dire six secondes après que le "contact" ait été coupé. Le capteur de niveau reste donc alimenté six secondes après l'arrêt du véhicule.

Pendant ce temps, et ici cinq secondes après l'arrêt, la base de temps commande une conversion rapide en produisant un signal C de forme impulsionnelle identique à celui engendré lors de l'établissement du contact. La base de temps produit ensuite un signal TM de forme impulsionnelle, ici six secondes après l'arrêt du véhicule, pour commander au circuit 400 la mémorisation, dans un registre interne, de la valeur SNA obtenue après la conversion rapide qui a suivi l'arrêt du véhicule.

Le véhicule reste alors au repos pendant un certain temps durant lequel, on le rappelle, l'ensemble de l'interface reste sous tension, mais sans dommage pour la batterie du véhicule compte tenu de la faible consommation des circuits. Naturellement, si l'afficheur non représenté consomme une énergie électrique importante, son alimentation est coupée, de façon connue, pendant ce temps.

Pendant le temps d'arrêt, il peut y avoir remplissage ou vidange du réservoir du véhicule.

Lorsque le contact est établi, pour un nouveau déplacement du véhicule, une conversion rapide a lieu, comme cela a déjà été vu, à cause de l'impulsion sur le signal C. Immédiatement après l'impulsion sur le signal C, la base de temps produit un signal DRV de forme impulsionnelle qui commande au circuit 400 une comparaison de la valeur présente de SNA et de celle qui a été mémorisée dans le registre interne après l'arrêt précédent du véhicule.

Si ces deux valeurs ne sont pas égales, il y a eu remplissage ou vidange, et lorsque la base de temps produit, immédiatement après le signal DRV, un signal TRV de forme impulsionnelle, le circuit 400 fait prendre au signal SNB la nouvelle valeur du signal SNA.

S'il n'y a pas détection de remplissage ou de vidange, le circuit 400 fait prendre au signal SNC la valeur du signal SNB, ce qui réactualise la valeur du compteur-décompteur 3. Ceci est particulièrement utile dans le cas où le véhicule a stationné en pente et où les valeurs converties cinq secondes après l'arrêt, et au moment du départ, tout en étant égales, sont fausses par rapport à la valeur SNB qui résulte d'une moyenne temporelle sur toute la durée du parcours précédent.

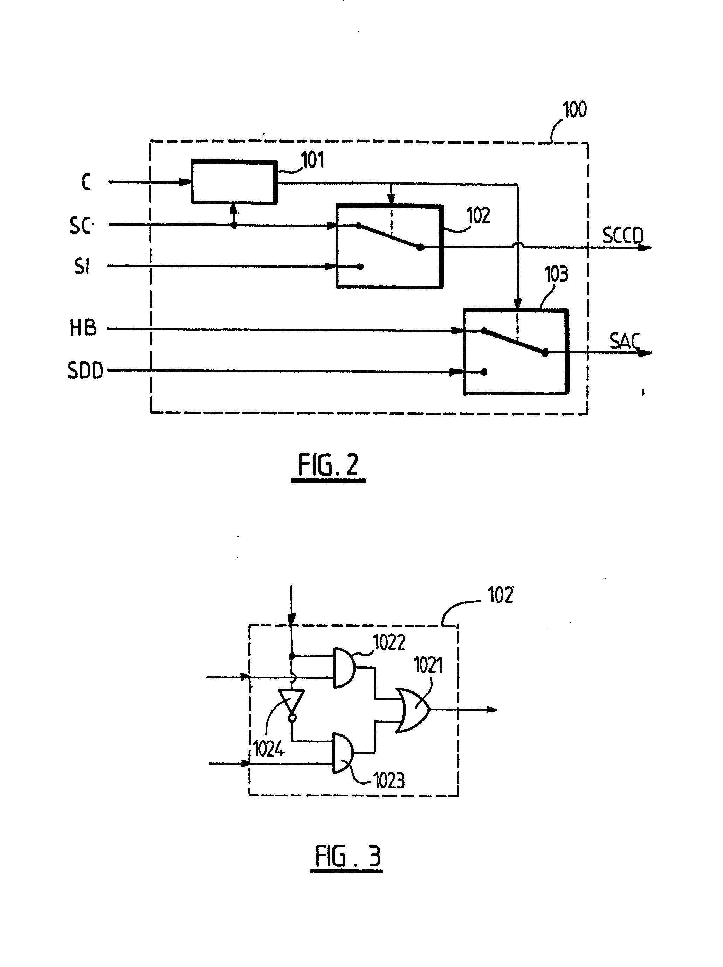

En référence à la figure 2, le circuit de commutation 100 comprend une bascule 101 de type classique pourvue d'une entrée recevant le signal C, d'une entrée $\overline{Clear}$ recevant le signal SC, et d'une sortie. Deux commutateurs logiques 102 et 103 identiques sont pourvus chacun d'une entrée de commande reliée à la sortie de la bascule 101, de deux entrées de signal et d'une sortie de signal. Les deux entrées de signal du commutateur 102 reçoivent les signaux SC et SI et sa sortie de signal délivre le signal SCCD. Les deux entrées de signal du commutateur 103 reçoivent les signaux HB et SDD et sa sortie délivre le signal SAC.

La figure 3 donne un schéma détaillé du commutateur logique 102. Les deux entrées d'une porte ET 1022 correspondent à une entrée de signal et à l'entrée de commande. Les deux entrées d'une autre porte ET 1023 correspondent à l'autre entrée de signal et à l'entrée de commande inversée à l'aide d'un inverseur 1024. Les sorties des portes ET 1022 et 1023 sont reliées aux entrées d'une porte OU 1021 dont la sortie est la sortie du signal du commutateur logique 102.

Le fonctionnement du circuit de commutation 100 est le suivant. La bascule 101, en réponse à l'impulsion du signal C, délivre un niveau haut sur l'entrée de commande des commutateurs 102 et 103, dont les signaux SCCD et SAC recopient les signaux SC et HB, respectivement. Lorsque le signal SC, appliqué à l'entrée $\overline{\text{Clear}}$ de la bascule 101, passe au niveau bas, la conversion rapide est terminée, et la bascule 101 délivre un niveau bas sur l'entrée de commande des commutateurs 102 et 103. Les signaux SCCD et SAC recopient les signaux SI et SDD, respectivement.

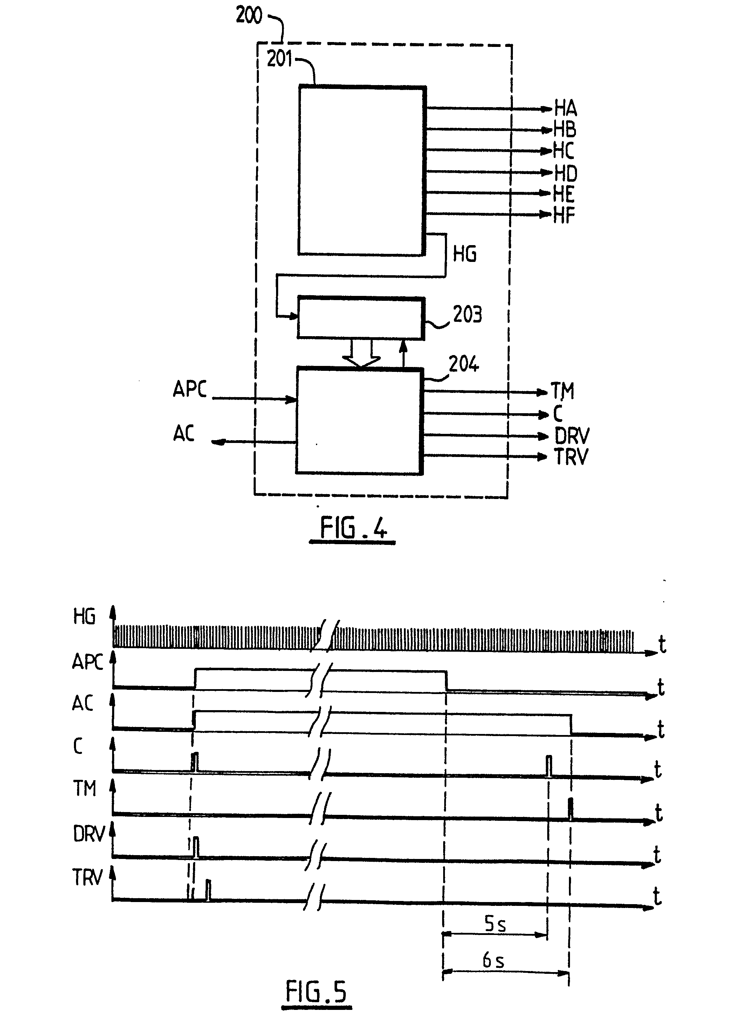

En référence à la figure 4, la base de temps 200 comprend une horloge 201, de type connu, pourvue de sept sorties délivrant, d'une part, les six signaux d'horloge HA, HB, HC, HD, HE et HF et, d'autre part, un signal d'horloge HG. Un compteur 203 compte les impulsions du signal d'horloge HG. Un réseau combinatoire 204, en réponse au signal APC d'une part, et, d'autre part, à la sortie numérique parallèle du compteur 203, délivre un signal de remise à zéro du compteur 203 et les signaux TM, C, DRV, TRV et AC qui ont été définis. Le réseau combinatoire 204 ne sera pas décrit davantage, car il est à la portée de l'homme de métier.

La fréquence de récurrence du signal HG étant de quelques Hertz, le fonctionnement de la base de temps 200 est classique. Les flancs montant et descendant du signal APC déclenchent la remise à zéro du compteur 203, dont l'avancement déclenche ensuite les différentes temporisations grâce au réseau combinatoire 204.

En référence à la figure 6, le circuit 300 diviseur avec décalage comprend deux bascules sur front d'horloge 306 et 307 recevant respectivement les signaux CTE/DM et HC et dont les sorties sont reliées à une porte OU 308, elle-même reliée à l'entrée d'horloge d'un troisième compteur-décompteur 309, dont la sortie de débordement délivre le signal SDD. Le signal HE est appliqué à un inverseur 301, à un diviseur de fréquence 302, divisant par deux, et à une entrée d'une porte $\overline{OU}$ 303 dont l'autre entrée reçoit le signal HE2 en sortie du diviseur 302. Le signal de sortie H" de la porte $\overline{OU}$ 303 est appliquée à l'entrée d'horloge de la bascule 307.

Le signal $\overline{HE}$ en sortie de l'inverseur 301 et le signal HE2 sont appliqués à une porte ET 304 dont la sortie délivre un signal H' appliqué à l'entrée d'horloge de la bascule 306. Le signal HE2 est appliqué à l'entrée de remise à zéro de la bascule 307, à l'entrée de commande de comptage-décomptage du troisième compteur-décompteur 309 et, par l'intermédiaire d'un inverseur 305, à l'entrée de remise à zéro de la bascule 306.

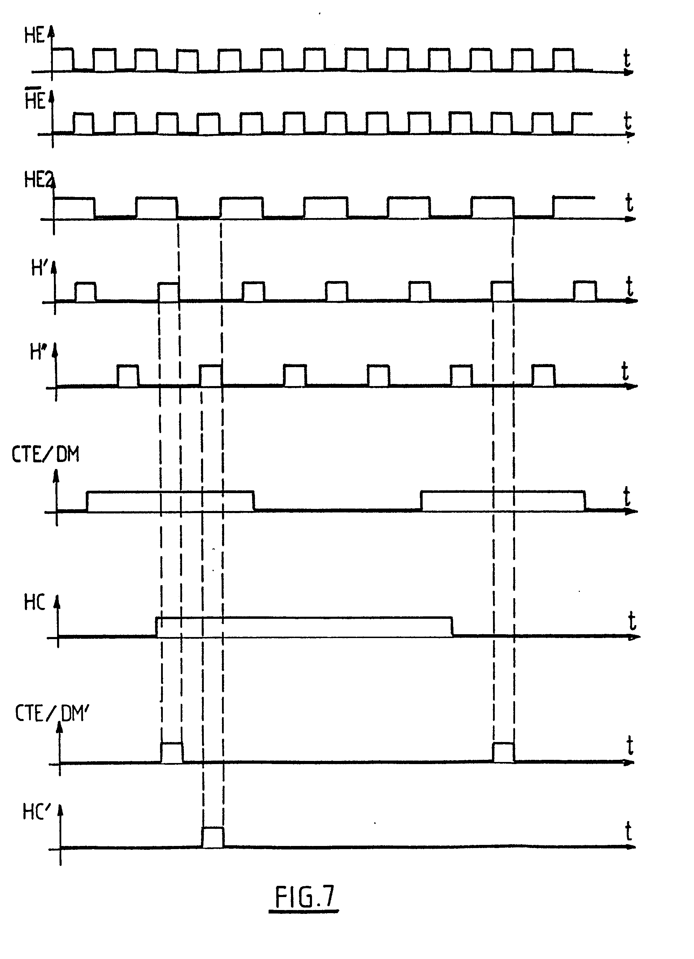

Le fonctionnement du circuit diviseur avec décalage est expliqué en référence à la figure 7.

Le signal CTE/DM a couramment une fréquence de récurrence de l'ordre de quelques centaines de Hz. Comme on le comprendra par la suite, le signal d'horloge HC est du même ordre de grandeur, et on choisit un signal HE de fréquence beaucoup plus élevée, ici un de l'ordre de quelques dizaines de kHz. Les diagrammes temporels des signaux HE, $\overline{HE}$, HE2, H' et H" étant représentés sur la figure 7, il apparaît que le signal HC' en sortie de la bascule 307 est une impulsion dont le flanc de montée est commandé par le premier flanc de montée du signal H" qui suit un flanc de montée du signal HC. De même, le signal CTE/DM' en sortie de la bascule 306 est une impulsion dont le flanc de montée est commandé par le premier flanc de montée du signal H' qui suit un flanc de montée du signal CTE/DM. Compte tenu du fait que les flancs de montée des signaux H" et H' sont toujours décalés dans le temps, on est certain, ainsi, que les flancs de montée des signaux HC' et CTE/DM' sont décalés, même si les signaux HC et CTE/DM ont des flancs de montées simultanés. Les flancs de descente des signaux HC' et CTE/DM' correspondant respectivement au flanc de montée et au flanc de descente du signal HE2, il n'y a jamais chevauchement d'une impulsion du signal HC' et d'une impulsion du signal CTE/DM'. Comme une impulsion du signal HC' a toujours lieu pendant que le signal HE2 est au niveau bas, et que le signal HE2 commande le décomptage du compteur-décompteur 309, celle-ci sera toujours décomptée. De même une impulsion du signal CTE/DM' sera toujours comptée, car elle a toujours lieu pendant que le signal HE2 est au niveau haut. Ainsi, au bout d'une seconde, le contenu du compteur-décompteur 309 est égal à :

$$f_{CTE/DM} - f_{HC}$$

Si le compteur-décompteur a une capacité de N, la sortie débordement délivre donc un signal SDD de fréquence $f_{SDD}$ telle que :

$$f_{SDD} = \frac{1}{N} (f_{CTE/DM} - f_{HC})$$

La fréquence $f_{CTE/DM}$ est donc "décalée" d'une quantité $f_{HC}$ puis divisée par le nombre N, ou encore la fréquence $f_{SDD}$ est une fonction linéaire de la fréquence $f_{CTE/DM}$.

On peut donc dire que les bascules 306 et 307, ainsi que la porte OU 308 forment un circuit de multiplexage temporel à deux entrées recevant les signaux HC et CTE/DM, et une sortie reliée au compteur-décompteur 309, et que le diviseur 302 et les portes 301, 303 et 304 commandant le circuit de multiplexage précédent, et le compteur-décompteur 309 pour compter les impulsions du signal CTE/DM et décompter celles du signal HC.

20
0246120

Le résultat, obtenu, c'est-à-dire la division avec décalage de la fréquence du signal CTE/DM est particulièrement utile dans le cas fréquent où ce signal est délivré
par un compte-tour électronique, car la consommation
n'est pas proportionnelle à la vitesse de rotation du
moteur. On peut alors, en ajustant au mieux les paramètres
N et $f_{HC}$, obtenir une bonne concordance de la vitesse de
rattrapage et de la consommation.

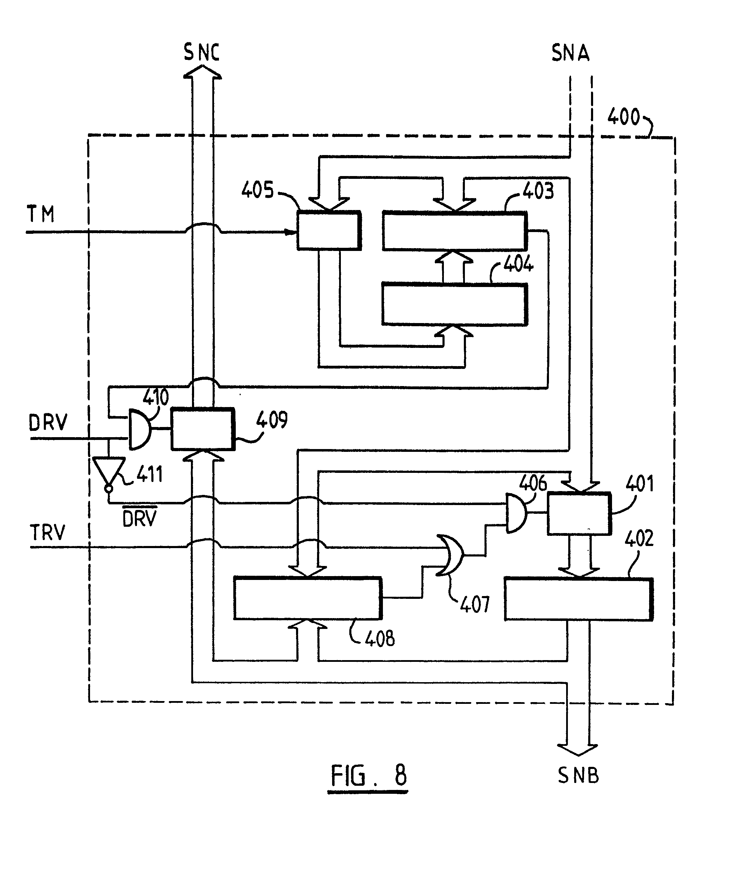

En référence à la figure 8, le circuit 400 de détection de
remplissage et de vidange et de blocage des accroissements
parasites comprend, disposés en tampon entre l'entrée
recevant le signal numérique parallèle SNA et la sortie
délivrant le signal numérique parallèle SNB un circuit de
portes 401, du type connu à trois états, et un registre
de sortie 402. Il comprend également un comparateur numérique 408 recevant, d'une part, le signal numérique SNA
et, d'autre part, le signal numérique SNB du registre de
sortie 402. Une sortie binaire du comparateur, au niveau
haut lorsque la valeur du signal SNA est inférieure à la
valeur du signal SNB, est reliée à une entrée d'une porte
OU 407 dont l'autre entrée reçoit le signal TRV. La sortie
de la porte OU 407 est reliée à une entrée d'une porte
ET 406 dont l'autre entrée reçoit le signal $\overline{DRV}$ obtenu par
inversion du signal DRV dans un inverseur 411. La sortie
de la porte ET 406 commande le circuit de portes 401 de
façon à ce que celles-ci restent à l'état haute impédance
lorsque la sortie de la porte ET 406 est au niveau bas,
et permettent l'inscription du signal SNA dans le registre
de sortie 402 lorsque la sortie de la porte ET 406 est au
niveau haut.

Le fonctionnement des circuits qui viennent d'être décrits
est le suivant. Pendant la majeure partie du temps, le
signal $\overline{DRV}$ est au niveau haut et le signal TRV au niveau bas. L'inscription du signal SNA dans le registre de sortie 402 n'est possible que si le signal de sortie du comparateur est au niveau haut, c'est-à-dire si la valeur du signal SNA est inférieure à la valeur du signal SNB. Naturellement, au moment où les signaux TRV ou DRV passent au niveau haut comme cela est le cas après l'établissement du "contact", ceci n'est plus vrai, comme cela sera expliqué par la suite. Aussi, on peut dire que le comparateur 408 et les portes 407 et 406 sont des moyens commandables par les signaux TRV et $\overline{DRV}$, et agencés pour interdire la mémorisation, par le circuit de portes 401 et le registre de sortie 402, d'une valeur supérieure à la valeur mémorisée précédemment.

Ainsi, les accroissements parasites ne sont pas transmis par le circuit 400.

Le circuit 400 comprend également un autre circuit de portes 405 qui reçoit le signal numérique SNA et est suivi d'un registre interne 404. Le circuit de portes 405, identique au circuit de portes 401, est commandé par le signal TM. Un comparateur numérique 403, recevant, d'une part, le signal numérique SNA et, d'autre part, le signal mémorisé dans le registre interne 404, est pourvu d'une sortie binaire, au niveau haut en cas d'égalité, appliquée à une entrée d'une porte ET 410 recevant sur l'autre entrée le signal DRV. La sortie de la porte ET 410 commande un circuit de portes 409, identique aux circuits de portes 401 et 405, disposé entre le registre de sortie délivrant le signal SNB et la sortie numérique délivrant le signal SNC au deuxième compteur-décompteur 3.

Le fonctionnement des circuits qui viennent d'être décrits est le suivant. Si, au moment où le signal DRV passe au niveau 1, la sortie du comparateur 403 est au niveau haut, il n'y a pas eu de remplissage ou de vidange, et la valeur mémorisée dans le registre de sortie 402 est transférée vers le deuxième compteur-décompteur 3, via le circuit de portes 409. En effet, cette valeur représente le résultat d'une intégration, ou d'un moyennage, sur un temps assez long, et elle est plus juste que la valeur SNA à cet instant, surtout si le véhicule a stationné en pente. Si il y a eu détection de remplissage et de vidange, le circuit de portes 409 reste bloqué.

Naturellement, pendant que le signal DRV est au niveau haut, le signal $\overline{\text{DRV}}$ est au niveau bas pour assurer un blocage du circuit de portes 401, de façon à isoler le registre de sortie 402 et à conserver la valeur qui s'y trouve mémorisée, utile en cas de non-détection de remplissage ou de vidange.

Le passage du signal TRV au niveau haut permet ensuite le transfert de la valeur du signal SNA dans le registre de sortie 402, ce qui est utile en cas de détection de remplissage ou de vidange.

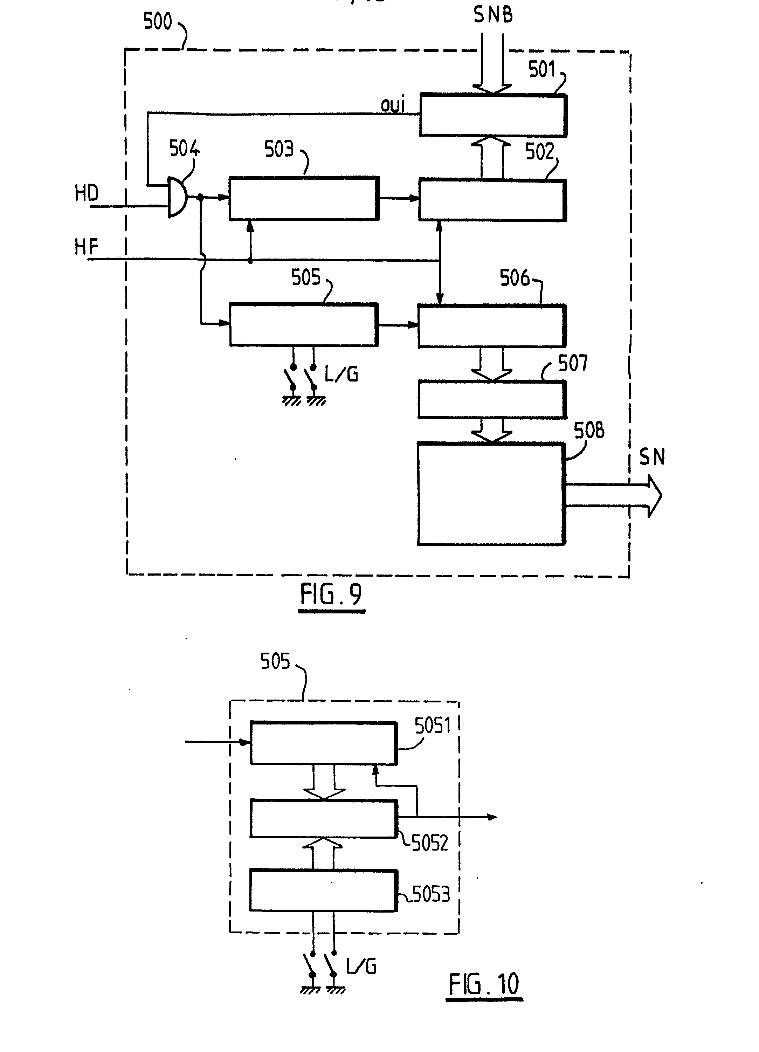

En référence maintenant à la figure 9, le circuit 500 d'application d'un facteur d'échelle comprend un premier diviseur de fréquence 503 par un nombre fixe, ici un compteur 5 bits divisant donc par 32, suivi d'un compteur 502 dont la sortie numérique est appliquée à une entrée d'un comparateur numérique 501 recevant sur son autre entrée le signal numérique SNB. La sortie du comparateur numérique 501, au niveau haut en cas d'égalité, est appliquée à une entrée d'une porte ET 504 dont l'autre entrée reçoit le signal HD et dont la sortie est appliquée à l'entrée d'horloge du premier diviseur 503. Un deuxième diviseur de fréquence 505, par un nombre commandable, reçoit également sur son entrée d'horloge le signal de sortie de la porte ET 504. La sortie du deuxième diviseur 505 est reliée à un compteur BCD 506, dont la sortie est reliée à un circuit 507 de décodage sept segments, de type connu, lui-même suivi d'un circuit 508 de commande, de type connu, pour afficheur numérique. Le signal HF est relié aux entrées de remise à zéro des compteurs 502, 503 et 506.

Le deuxième diviseur 505 par un nombre variable comprend ici, en référence à la figure 10, un compteur 5051, dont la sortie numérique, ici à 7 bits, est comparée, par un comparateur numérique 5052 à la sortie numérique, à 7 bits également, de valeur M, obtenue à l'aide d'un réseau combinatoire 5053 commandé par deux commutateurs L/G. La sortie du comparateur numérique 5052 est reliée à l'entrée de remise à zéro du compteur 5051 et constitue la sortie du diviseur 505 qui divise par le nombre M, puisque une impulsion se trouve délivrée sur cette sortie chaque fois que M impulsions ont été comptées par le compteur 5051. Le réseau combinatoire 5053 n'est pas décrit davantage car il est à la portée de l'homme de métier.

Le circuit d'application d'un facteur d'échelle fonctionne comme suit. Le signal d'horloge HF a ici une fréquence de 1 Hz. Après remise à zéro par ce signal, le compteur 502 compte les impulsions délivrées par le diviseur 503 jusqu'à ce que le comparateur 501, détectant l'égalité, commande le blocage du signal HD grâce à la porte ET 504. La fréquence du signal HD est ici de l'ordre d'une centaine de Hertz. A ce moment, la sortie numérique du compteur 502 est égale à la valeur du signal SNB, ce qui veut dire qu'il est passé à travers la porte 504 un nombre n d'impulsions du signal HD tel que :

$$n = 32 \times (\text{valeur de SNB})$$

Alors la sortie du compteur BCD 506 vaut :

n / M

car le diviseur 505 divise par M. La sortie SN vaudra donc:

(32/M) x (valeur de SNB)

Ainsi le circuit 500 applique un facteur d'échelle égal à 32/M. Comme M est commandable à l'aide de commutateurs L/G, ici au nombre de deux, pour pouvoir commander au moins trois valeurs de M correspondant respectivement aux litres, gallons anglais ou gallons américains, l'interface est adaptable, en manoeuvrant les commutateurs L/G à n'importe quel véhicule.

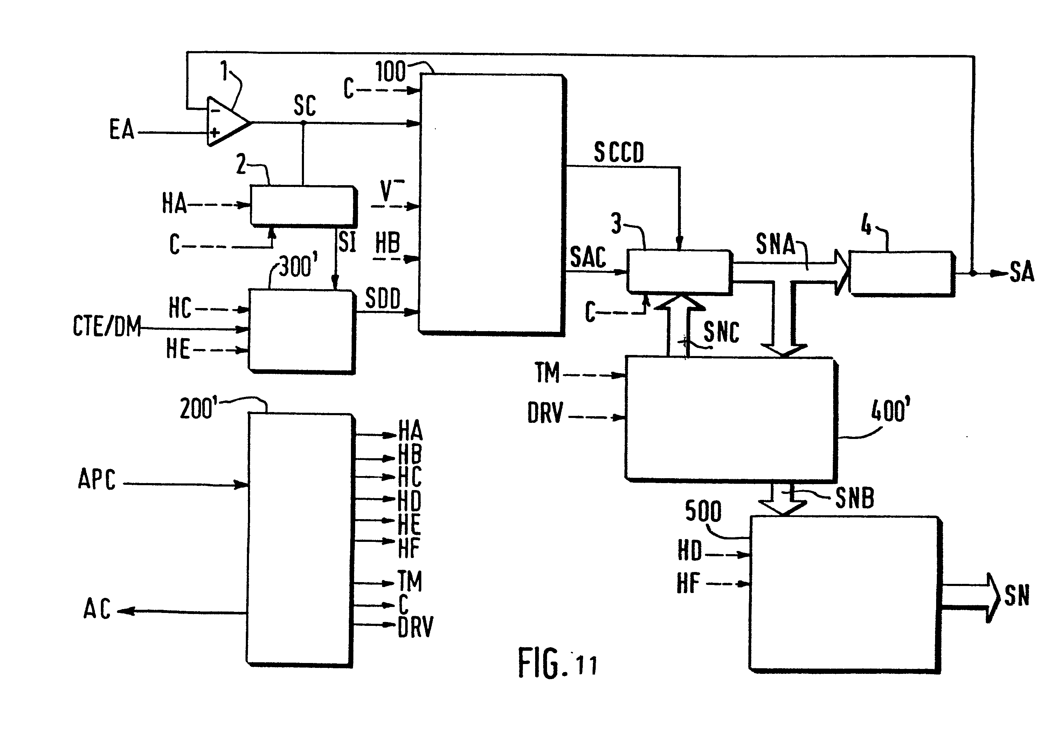

En référence à la figure 11, une variante du dispositif électronique d'interface de l'invention comprend les mêmes éléments, désignés par les mêmes références, que le dispositif décrit précédemment, agencés de la même façon, à ceci près que :

- l'entrée du circuit de commutation 100 qui reçoit le signal SI dans le dispositif décrit précédemment est reliée ici un potentiel constant V-, au niveau logique bas,

- le circuit 300 diviseur avec décalage est remplacé par un circuit 300' diviseur avec décalage à rapport de division commandable, pourvu d'une entrée de commande du rapport de division recevant le signal SI, ·

- le circuit 400 de détection de remplissage et de vidange et de blocage des accroissements parasites est remplacé par un circuit 400' de détection de remplissage et vidange, et,

- la base de temps 200 est remplacée par une base de
  temps 200'.

Avant de décrire de façon plus détaillée les nouveaux
circuits 200', 300' et 400', abordons le fonctionnement
de l'interface. Pendant la phase de conversion rapide qui
a lieu après la mise du "contact" du véhicule, le présent
dispositif fonctionne exactement comme le dispositif précédent, car pendant cette phase, les commutateurs logiques
102 et 103 sont commandés pour que les signaux SCCD et
SAC soient identiques aux signaux SC et HB, qui ne sont
pas affectés par les modifications décrites.

Pendant le déplacement du véhicule, les commutateurs logiques 102 et 103 sont commandés pour que les signaux SCCD
et SAC soient identiques aux signaux V- et SDD, respectivement. Or le signal V- étant au niveau logique bas,
c'est un potentiel assurant la commande de décomptage du
deuxième compteur-décompteur 3 qui est appliquée à son
entrée de commande. Ainsi, la sortie numérique SNA ne peut
que décroître. Comme cela sera vu dans la suite, afin que
le signal analogique SA suive au mieux les variations du
signal EA, le signal SI commande le rapport de division
du circuit 300' diviseur avec décalage, c'est-à-dire la
fréquence de récurrence du train d'impulsions SDD, donc
la vitesse à laquelle le signal numérique SNA et le signal
analogique SA diminuent. On peut donc dire que le signal
SI commande la diminution du signal SA, en commandant sa
vitesse.

Comme dans le dispositif précédent, ces signaux suivent la
décroissance lente du niveau dans le réservoir, sans reproduire les variations parasites rapides du signal EA, grâce à l'effet d'intégration du premier compteur-décompteur 2, dont la sortie de signe commande leur vitesse de décroissance.

Le circuit 400' de détection de remplissage et de vidange agit comme le circuit 400 de détection de remplissage et de vidange et de blocage des accroissements parasites décrit précédemment, lors de l'établissement du contact. Mais, dans le présent dispositif, comme le signal SNA ne peut que décroître pendant le déplacement du véhicule, le circuit 400' ne comporte pas de circuits de blocage des accroissements, désormais inutiles.

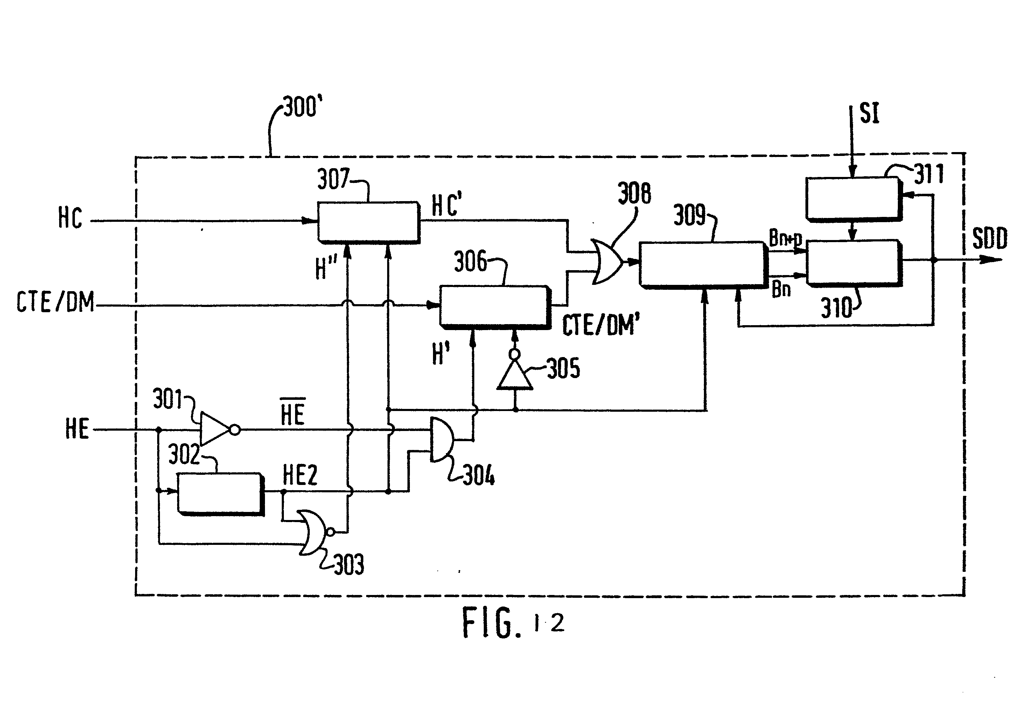

En référence maintenant à la figure 12, le circuit 300' diviseur avec décalage à rapport de division commandable comprend, d'une part, les mêmes éléments, désignés par les mêmes références, que le circuit 300 diviseur avec décalage, éléments qui ne seront donc pas décrits à nouveau, et d'autre part un commutateur logique 310 et une bascule 311.

On utilise maintenant l'entrée de remise à zéro dont est pourvu le compteur-décompteur 309, et au lieu de la sortie de débordement de ce compteur-décompteur 309, deux sorties binaires $B_n$ et $B_{n+p}$ correspondant au bit de rang n et au bit de rang n + p, respectivement, de la sortie numérique du compteur-décompteur 309.

Le commutateur logique 310, identique au commutateur 102 est pourvu d'une entrée de commande, de deux entrées de signal reliées aux deux sorties $B_n$ et $B_{n+p}$, et d'une sortie de signal délivrant le signal SDD.

La bascule 311 est pourvue d'une entrée D recevant le signal SI, d'une sortie Q reliée à l'entrée de commande du commutateur 310, et d'une entrée d'horloge recevant le signal SDD.

Le signal SDD est également appliqué à l'entrée de remise à zéro du compteur-décompteur 309.

Le fonctionnement du circuit 300' est le suivant. A chaque instant correspondant à un flanc de montée d'une impulsion du signal SDD, la bascule 311 recopie en sortie la valeur de signal SI à cet instant, et la maintient jusqu'au flanc de montée suivant. Supposons que cette valeur corresponde à un signe négatif en sortie du compteur-décompteur 2. Cela signifie que, au cours de l'intervalle de temps précédent, le signal EA est resté en moyenne inférieur au signal SA. Celui-ci doit donc être réduit assez vite. A cet effet, le commutateur logique 310, est agencé pour que le signal SI commande la connexion de la sortie binaire $B_n$ à la sortie SDD, dont la fréquence de récurrence vaut alors :

$$f_{SDD} = \frac{1}{2^n} (f_{CTE/DM} - f_{HC})$$

Dans le cas où le signal SI correspond à un signe positif, le signal SA doit être réduit moins rapidement, et c'est donc la sortie binaire $B_{n+p}$ qui est connectée à la sortie SDD, dont la fréquence de récurrence vaut :

$$f_{SDD} = \frac{1}{2^{n+p}} (f_{CTE/DM} - f_{HC})$$

Ainsi, on peut dire que la pente de la fonction linéaire qui relie la fréquence de récurrence $f_{SDD}$ à la fréquence de récurrence $f_{CTE/DM}$ est commandée par la sortie de signe du compteur-décompteur 2.

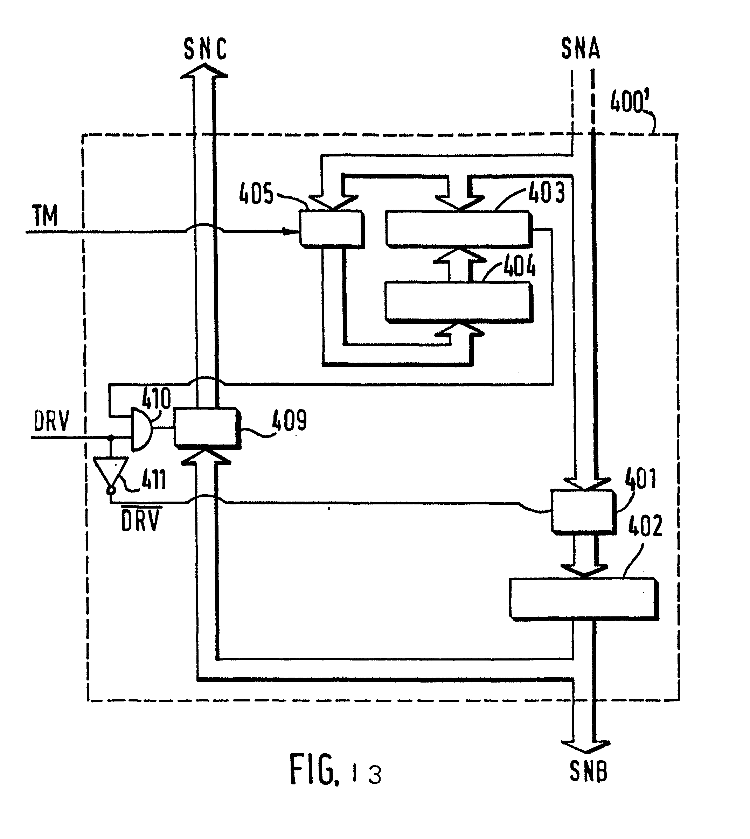

En référence à la figure 13, le circuit 400' de détection de remplissage et de vidange comprend les mêmes éléments que le circuit 400 de détection de remplissage et de vidange et de blocage des accroissements parasites, à l'exception du comparateur 408, de la porte OU 407, et de la porte ET 406 qui sont supprimés. Le signal $\overline{DRV}$ en sortie de l'inverseur 411 est appliqué directement à l'entrée de commande du circuit de portes 401.

Le fonctionnement du circuit 400' de détection de remplissage et de vidange est comparable à celui du circuit 400 en ce qui concerne le comparateur 403, le circuit de portes 405, le registre 404, le circuit de portes 409, la porte 410 et l'inverseur 411. Le signal $\overline{DRV}$ isole le registre de sortie 402 et conserve la valeur qui s'y trouve mémorisée, en cas de non-détection de remplissage ou de vidange, pendant le temps où le signal DRV est au niveau haut. Dès que le signal DRV est au niveau bas, le contenu du registre de sortie 402 est constamment égal au signal SNA.

La base de temps 200' est identique à la base de temps 200 a ceci près qu'elle ne délivre pas le signal TRV qui est inutile dans la présente forme de réalisation.

Dans la deuxième forme de réalisation qui vient d'être décrite, la pente de la fonction linéaire qui relie la fréquence du train d'impulsions SDD à la fréquence du train d'impulsions CTE/DM ne dépend que de la sortie de signe du compteur-décompteur 2. Il est possible de prévoir une variante dans laquelle, lorsque la quantité d'essence dans le réservoir est inférieure à un certain seuil, la pente correspondant à la fréquence la plus rapide du train d'impulsions SDD soit systématiquement commandée. Ainsi, lorsque le réservoir est presque vide, l'indication affichée est plutôt inférieure à la réalité. Un homme de métier est à même de modifier les circuits qui viennent d'être décrit pour réaliser une telle variante.

Naturellement, les deux formes de réalisation de l'interface qui viennent d'être décrites sont assez complètes, et l'interface de l'invention peut être réalisée sous des formes plus simples. Par exemple, le circuit diviseur avec décalage 300, ou 300', le circuit 400, ou 400', de détection de remplissage et de vidange et de blocage des accroissements parasites, ainsi que le circuit 500 d'application d'un facteur d'échelle ne sont pas absolument obligatoires. On peut supprimer l'un d'entre eux, deux d'entre eux ou même les trois, en simplifiant en conséquence la base de temps 200, sans sortir du cadre de l'invention.

Dans le cas où l'on supprime le circuit diviseur avec décalage 300, ou 300', il faut remplacer le signal SDD par un signal d'horloge de fréquence telle qu'un compromis soit réalisé pour le rattrapage à bas et à haut régime.

Si on utilise un afficheur analogique commandé par la sortie SA, il est évidemment inutile de prévoir les circuits 400, ou 400', et 500.

Par ailleurs, le dispositif de l'invention n'est pas limité aux mesures du niveau à bord d'une automobile et il peut être utilisé avantageusement à chaque fois que des variations rapides doivent être filtrées entre deux points d'un circuit électronique.

Naturellement il n'est pas obligatoire que le dispositif reste en permanence alimenté et il peut être utilisé en étant remis à chaque utilisation sous tension. Dans ce cas, il faut prévoir des mémoires non volatiles, en particulier pour le circuit 400, ou 400', si ce dernier est utilisé.

30

0246120

Revendications

1. Dispositif électronique d'interface entre un capteur d'une grandeur physique, à sortie analogique, et un afficheur de la valeur de ladite grandeur physique, comprenant :

- un générateur commandable (3, 4, 300; 3, 4, 300') pour commander ledit afficheur, et pourvu d'une sortie analogique, et,
- un comparateur analogique d'amplitude (1), pour comparer les amplitudes des signaux (EA, SA) en sortie dudit capteur et dudit générateur commandable (3, 4, 300; 3, 4, 300'), et dont le signal binaire (SC) de sortie commande ledit générateur commandable (3, 4, 300; 3, 4, 300'), dispositif caractérisé par le fait que :

- ledit générateur commandable (3, 4, 300; 3, 4, 300') est pourvu d'une entrée de commande binaire (SCCD) commandant l'augmentation et la diminution de son signal (SA) de sortie,
- il est prévu, en outre, une horloge (201) et un premier compteur-décompteur (2) d'un premier signal (HA) d'horloge, et,
- le signal binaire (SC) de sortie dudit comparateur (1) commande le comptage et le décomptage du premier compteur-décompteur (2), dont le signal binaire (SI) de signe commande l'augmentation et la diminution du signal de sortie (SA) dudit générateur (3, 4, 300; 3, 4, 300').

2. Dispositif selon la revendication 1, dans lequel sont prévus des moyens commandables (100), pour commander ledit générateur (3, 4, 300; 3, 4, 300') de façon à ce qu'il délivre un signal variant de façon monotone, dans un sens et à une vitesse commandables.

3. Dispositif selon l'une des revendications 1 et 2, dans lequel ledit générateur commandable comprend des moyens (300) pour engendrer un premier train d'impulsions (SDD), un deuxième compteur-décompteur (3) pourvu d'une entrée d'horloge recevant ledit premier train d'impulsions (SDD), et un convertisseur numérique-analogique (4) relié à la sortie numérique (SNA) dudit deuxième compteur-décompteur (3), l'entrée de commande dudit générateur étant l'entrée de commande de comptage-décomptage dudit deuxième compteur-décompteur (3).

4. Dispositif selon la revendication 3, dans lequel lesdits moyens commandables (100) pour commander ledit générateur (3, 4) comprennent un premier circuit de commutation (102) agencé pour appliquer, à l'entrée de commande de comptage-décomptage dudit deuxième compteur-décompteur (3), au lieu de ladite sortie de signe (SI), ladite sortie (SC) dudit comparateur, et un deuxième circuit de commutation (103) agencé pour appliquer, à ladite entrée d'horloge dudit deuxième compteur-décompteur (3), au lieu dudit premier train d'impulsions (SDD), un deuxième signal d'horloge (HB).

5. Dispositif selon l'une des revendications 3 et 4, dans lequel ladite grandeur physique est le niveau de carburant à bord d'un véhicule pourvu d'un capteur supplémentaire de l'un des types suivants : compte-tour électronique et débitmètre, ledit capteur supplémentaire engendrant un deuxième train d'impulsions (CTE/DM), lesdits moyens (300) pour engendrer ledit premier train d'impulsions (SDD) sont agencés pour que la fréquence de récurrence dudit premier train d'impulsions (SDD) soit une fonction linéaire de la fréquence de récurrence dudit deuxième train d'impulsions (CTE/DM).

6. Dispositif selon la revendication 5, dans lequel lesdits moyens (300) pour engendrer ledit premier train d'impulsions (SDD) comprennent un circuit de multiplexage (306, 307, 308) à deux entrées, recevant ledit deuxième train d'impulsions (CTE/DM) et un troisième signal d'horloge (HC), et une sortie, un troisième compteur-décompteur (309) pourvu d'une entrée d'horloge reliée à ladite sortie dudit circuit de multiplexage (306, 307, 308) ainsi que d'une sortie délivrant ledit premier train d'impulsions (SDD), et un circuit de commande (301, 302, 303, 304) relié audit circuit de multiplexage (306, 307, 308) et à l'entrée de commande de comptage-décomptage dudit troisième compteur-décompteur (309) pour commander le comptage des impulsions du deuxième train d'impulsions (CTE/DM) et le décomptage des impulsions du troisième signal d'horloge (HC).

7. Dispositif selon l'une des revendications 3 à 6, pour lequel ledit afficheur est du type numérique, et dans lequel il est prévu, disposés en tampon entre ladite sortie numérique (SNA) dudit deuxième compteur-décompteur (3) et ledit afficheur, des premiers moyens (401,402) pour mémoriser, à un instant donné, la valeur de ladite sortie numérique (SNA).

8. Dispositif selon la revendication 7, dans lequel il est prévu des deuxièmes moyens (405, 404) pour mémoriser à un autre instant donné la valeur de ladite sortie numérique (SNA), un premier comparateur numérique (403) agencé pour comparer la valeur de ladite sortie numérique (SNA) et la valeur mémorisée dans lesdits deuxièmes moyens (405, 404) et des moyens (409), commandés par ledit comparateur numérique (403) pour transférer la valeur mémorisée dans lesdits premiers moyens (401, 402) dans ledit deuxième compteur-décompteur (3).

9. Dispositif selon la revendication 7, dans lequel il est prévu des moyens commandables (406, 407, 408) agencés pour interdire la mémorisation, à un instant donné, par lesdits premiers moyens de mémorisation (401, 402) d'une valeur supérieure à la valeur mémorisée à l'instant donné précédent.

10. Dispositif selon l'une des revendications 3 à 8, dans lequel il est prévu, en amont dudit afficheur, des moyens (501-506) pour appliquer un facteur d'échelle commandable à la valeur du signal numérique à afficher (SNB).

11. Dispositif selon la revendication 9, dans lequel lesdits moyens (501-506) d'application du facteur d'échelle comprennent un premier circuit diviseur de fréquence (503) par un nombre fixe, à l'entrée duquel est appliqué un quatrième signal d'horloge (HD), suivi d'un premier compteur (502), un deuxième diviseur de fréquence (505) par un nombre commandable, à l'entrée duquel est appliqué ledit quatrième signal d'horloge (HD) suivi d'un deuxième compteur (506), un deuxième comparateur numérique (501) agencé pour comparer la valeur du signal numérique (SNB) à la sortie numérique dudit premier compteur (502) et des moyens (504) pour bloquer ledit quatrième signal d'horloge (HD), commandés par ledit deuxième comparateur numérique (501) en cas d'égalité, la sortie numérique dudit deuxième compteur (506) étant reliée audit afficheur.

12. Dispositif selon la revendication 1, dans lequel ladite grandeur physique est le niveau de carburant à bord d'un véhicule, et ledit générateur commandable comprend :

- des moyens (300') pour engendrer un premier train d'impulsions (SDD) de fréquence de récurrence commandable, commandée par ladite sortie de signe (SI) dudit premier compteur-décompteur (2),

- un deuxième compteur-décompteur (3) pourvu d'une entrée
d'horloge recevant ledit premier train d'impulsions (SDD)
et d'une entrée de commande de comptage-décomptage reliée,
pendant le déplacement du véhicule, à un potentiel assurant la commande de décomptage, et

- un convertisseur numérique-analogique (4) relié à la
sortie numérique (SNA) dudit deuxième compteur-décompteur
(3).

13. Dispositif selon la revendication 12, dans lequel lesdits moyens commandables (100) pour commander ledit générateur (3, 4, 300') comprennent un premier circuit de commutation (102) agencé pour, lors du démarrage dudit véhicule, appliquer, à l'entrée de commande de comptage-
décomptage dudit deuxième compteur-décompteur (3), au lieu
dudit potentiel assurant la commande de décomptage, ladite
sortie (SC) dudit comparateur (1), et un deuxième circuit
de commutation (103) agencé pour, lors du démarrage dudit
véhicule, appliquer, à ladite entrée d'horloge dudit deuxième compteur-décompteur (3), au lieu dudit premier train
d'impulsions (SDD), un deuxième signal d'horloge (HB).

14. Dispositif selon la revendication 12, dans lequel
ledit véhicule est pourvu d'un capteur supplémentaire de
l'un des types suivants : compte-tour électronique et
débitmètre, ledit capteur supplémentaire engendrant un
deuxième train d'impulsions (CTE/DM), lesdits moyens (300')
pour engendrer ledit premier train d'impulsions (SDD) sont
agencés pour que la fréquence de récurrence dudit premier
train d'impulsions (SDD) soit une fonction linéaire de la
fréquence de récurrence dudit deuxième train d'impulsions
(CTE/DM), dont la pente est commandée par ladite sortie de
signe (SI) dudit premier compteur-décompteur (2).

15. Dispositif selon la revendication 14, dans lequel lesdits moyens (300') pour engendrer ledit premier train d'impulsions (SDD) comprennent un circuit de multiplexage (306, 307, 308) à deux entrées, recevant ledit deuxième train d'impulsions (CTE/DM) et un troisième signal d'horloge (HC), et une sortie, un troisième compteur-décompteur (309) pourvu d'une entrée d'horloge reliée à ladite sortie dudit circuit de multiplexage (306, 307, 308) ainsi que d'une sortie numérique parallèle dont deux bits sont appliqués à un circuit de commutation (310, 311), commandé par ladite sortie de signe (SI) pour délivrer ledit premier train d'impulsions (SDD), et un circuit de commande (301, 302, 303, 304) relié audit circuit de multiplexage (306, 307, 308) et à l'entrée de commande de comptage-décomptage dudit troisième compteur-décompteur (309) pour commander le comptage des impulsions du deuxième train d'impulsions (CTE/DM) et le décomptage des impulsions du troisième signal d'horloge (HC).

16. Dispositif selon la revendication 12, pour lequel ledit afficheur est du type numérique, et dans lequel il est prévu, disposés en tampon entre ladite sortie numérique (SNA) dudit deuxième compteur-décompteur (3) et ledit afficheur, des premiers moyens (401, 402) pour mémoriser, à un instant donné, la valeur de ladite sortie numérique (SNA).

17. Dispositif selon la revendication 16, dans lequel il est prévu des deuxièmes moyens (405, 404) pour mémoriser à un autre instant donné la valeur de ladite sortie numérique (SNA), un premier comparateur numérique (403) agencé pour comparer la valeur de ladite sortie numérique (SNA) et la valeur mémorisée dans lesdits deuxièmes moyens (405, 404) et des moyens (409), commandés par ledit comparateur numérique (403) pour transférer la valeur mémorisée dans lesdits premiers moyens (401, 402) dans ledit deuxième compteur-décompteur (3).

18. Dispositif selon la revendication 12, dans lequel il est prévu, en amont dudit afficheur, des moyens (501-506) pour appliquer un facteur d'échelle commandable à la valeur du signal numérique à afficher (SNB).

19. Dispositif selon la revendication 18, dans lequel lesdits moyens (501-506) d'application du facteur d'échelle comprennent un premier circuit diviseur de fréquence (503) par un nombre fixe, à l'entrée duquel est appliqué un quatrième signal d'horloge (HD), suivi d'un premier compteur (502), un deuxième diviseur de fréquence (505) par un nombre commandable, à l'entrée duquel est appliqué ledit quatrième signal d'horloge (HD) suivi d'un deuxième compteur (506), un deuxième comparateur numérique (501) agencé pour comparer la valeur du signal numérique (SNB) à la sortie numérique dudit premier compteur (502) et des moyens (504) pour bloquer ledit quatrième signal d'horloge (HD), commandés par ledit deuxième comparateur numérique (501) en cas d'égalité, la sortie numérique dudit deuxième compteur (506) étant reliée audit afficheur.

0246120

FIG.1

FIG. 2

FIG . 3

FIG.4

FIG.5

0246120

SDD

309

308

306  305  CTE/DM'

HC'  307  H''

H'

304

HE

303

HE2

301

302

300

HC

CTE/DM

HE

FIG.6

FIG.7

FIG. 8

FIG. 9

FIG. 10

FIG. 11

0246120

FIG. 12

0246120

FIG. 13